# EUROPÄISCHE PATENTSCHRIFT

(11) **EP 1 280 618 B1**
(45) Veröffentlichungstag und Bekanntmachung des Hinweises auf die Patenterteilung: **22.06.2005**
(21) Anmeldenummer: 01940206.4
(22) Anmeldetag: 26.04.2001
(51) Int. Cl.: B07C 3/00

(54) **VERFAHREN UND VORRICHTUNG ZUM ERMITTELN VON GEBIETEN MIT VERTEILINFORMATIONEN AUF SENDUNGEN**
METHOD AND DEVICE FOR DETECTING FIELDS CONTAINING MAIL ROUTING INFORMATION ON MAILED ITEMS
PROCEDE ET DISPOSITIF POUR DETERMINER DES ZONES D'INFORMATIONS DE DISTRIBUTION SUR DES ENVOIS

(30) Priorität: 04.05.2000 DE 10021734
(43) Veröffentlichungstag der Anmeldung: 05.02.2003
(73) Patentinhaber: SIEMENS AKTIENGESELLSCHAFT, 80333 München (DE)
(72) Erfinder: MEBOLD, Harald, 78464 Konstanz (DE); KLÜHE, Bernd, 78465 Konstanz (DE); EMANUELSSON, Pär, 78462 Konstanz (DE)
(86) Internationale Anmeldenummer: PCT/DE2001/001614
(87) Internationale Veröffentlichungsnummer: WO 2001/083124

(56) Entgegenhaltungen:
- EP-A- 0 589 119
- DE-A- 19 624 977
- US-A- 5 159 667

## Beschreibung

Die Erfindung bezieht sich auf ein Verfahren und eine Vorrichtung zum Ermitteln von Gebieten mit Verteilinformationen auf Sendungen, wobei ein digitales Abbild der die Verteilinformationen aufweisenden Oberfläche jeder Sendung gewonnen und gespeichert und einer OCR-Einheit zur automatischen Auswertung zugeführt wird und bei nicht eindeutig erkanntem gesuchten Gebiet das zugehörige gesamte Abbild der die Verteilinformationen aufweisenden Oberfläche an eine Videokodiervorrichtung weitergeleitet wird.

Das automatische Lesen (OCR) von Verteilinformationen, insbesondere Anschriften auf Postsendungen, ist eine weit verbreitete Technologie. Für Sendungen, die nicht automatisch gelesen werden konnten, ist das manuelle Videokodieren ebenso gängig (US 5 031 223, US 5 697 504). Im allgemeinen werden beim Videokodieren die Sendungen auf einem graphischen Display dargestellt und die Informationen manuell durch ein Eingabegerät (beispielsweise Tastatur) eingegeben.

Während bei Briefsendungen die Gebiete mit den Verteilinformationen, wie z.B. die Empfängeradresse, in der Regel leicht automatisch zu finden sind, gibt es bei anderen Sendungen, wie zum Beispiel Großbriefen (sogenannte Flats: Zeitungen, Zeitschriften, Kataloge) oder Paketen, Schwierigkeiten beim automatischen Finden der Gebiete, weil u.a. die Flächen relativ groß sind und sich die Adressen auf gemusterten oder bedruckten Flächen befinden. Dies ist besonders problematisch, weil es für einen gewissen Sendungstyp, wo die Adresse nicht zu finden ist, zu einem Totalausfall des automatischen Lesens kommt, und zwar für jede individuelle Sendung diesen Typs, weil die Adressfindung deterministisch ist.

Deshalb wird dann die Lage der Adresse videokodiert. Dieses Verfahren funktioniert folgendermaßen: auf dem Bildschirm des Videokodiersystems wird ein Bild der Sendung dargestellt und der Kodierer wählt, statt die Adresse einzugeben, einen bestimmten Bereich, in dem sich die Adresse befindet. Dies kann z.B. vorteilhaft so erfolgen, dass das Abbild durch ein Gitter in Segmente entsprechend dem Zifferblock einer Tastatur unterteilt wird und durch eine einzige Tastenbetätigung das Segment sehr schnell ausgewählt wird, in dem sich das gesuchte Gebiet befindet (DE 196 46 522 A1). Dieser Bereich geht dann an den automatischen Leseprozeß zurück, wo die Adresse anschließend gelesen wird.

Der beschriebene Vorgang weist aber mehrere Probleme auf. Erstens führt die manuelle Ermittlung eine gewisse Verzögerung ins System, was eine Sortiermaschine mit Verzögerungsstrecke o.ä. voraussetzt. So eine Maschine ist aber besonders für Großbriefe häufig nicht gegeben. Zweitens ist die Aufgabe von sehr repetitiver Natur, weil ähnliche Sendungen häufig nacheinander auftreten.

Es wurde auch eine Lösung bekannt, bei der die Lage des gesuchten Gebietes mittels Cursorpositionierung bestimmt wird und diese Position des Gebietes gespeichert wird für die nächste Sendung. Bei der nächsten Sendung versucht die OCR-Einheit die Adresse zu lesen und dabei als ersten Schritt das entsprechende Gebiet zu finden. Kann dieses Gebiet nicht gefunden werden, bzw. der Lesevorgang ist nicht erfolgreich, wird der automatische Lesevorgang mit der gespeicherten Position des Adressgebietes noch einmal gestartet.
Erst wenn dieser Leseprozeß auch nicht erfolgreich war, erfolgt eine Videokodierung (EP 0 589 119 Al). Damit wird erreicht, dass bei mehreren Sendungen hintereinander vom gleichen Typ von einem Großkunden und von der OCR-Einheit nicht gefundenem Adressgebiet dieses Adressgebiet nur einmal mittels Videokodierung eingegeben werden muss. Liegen diese Sendungen nicht direkt hintereinander, versagt dieses Verfahren.

Der in den Ansprüchen 1 und 3 dargelegten Erfindung liegt daher die Aufgabe zugrunde, ein Verfahren und eine Vorrichtung zu schaffen, die den Videokodieraufwand zum Ermitteln der Gebiete mit auszuwertenden Verteilinformationen im Rahmen des automatischen Leseprozesses reduzieren.

Das Ermitteln und Speichern der Signaturen von Abbildern, bei, denen die OCR-Einheit das Gebiet mit der Verteilinformation nicht identifizieren konnte, zusammen mit der mittels Videokodierung erzeugten Position des Gebietes mit der Verteilinformation in einer Datenbank und das Durchsuchen der Datenbank nach übereinstimmenden Signaturen zur Bestimmung der Gebietsposition verkürzt den Prozess der Ermittlung der Gebiete mit den Verteilinformationen, wenn die OCR-Einheit diese Gebiete nicht finden konnte, erheblich, da Sendungen gleicher Art (Signatur) nur einmal videokodiert werden müssen. Damit können auch Sortiermaschinen mit kurzen oder fehlenden Verzögerungsstrecken in den Videokodiermodus für die Verteilinformationsgebiete einbezogen werden.

Vorteilhaft ist es, die Daten aus mehreren Lesesystemen in eine Datenbank über elektronische Netze einzuspeisen, und entsprechend aus den Lesesystemen in der Datenbank nach übereinstimmenden Signaturen zu suchen. Dadurch müssen gleichartige Sendungen im Rahmen dieser Lesesysteme nur einmal hinsichtlich der Gebietslage videokodiert werden.

Anschließend wird die Erfindung in einem Ausführungsbeispiel anhand der Zeichnung näher erläutert.

Dabei zeigen
- FIG 1: die hauptsächlichen Komponenten einer erfindungsgemäßen Vorrichtung
- FIG 2: einen Ablauf des Verfahrens mit Hilfe eines Flussbildes

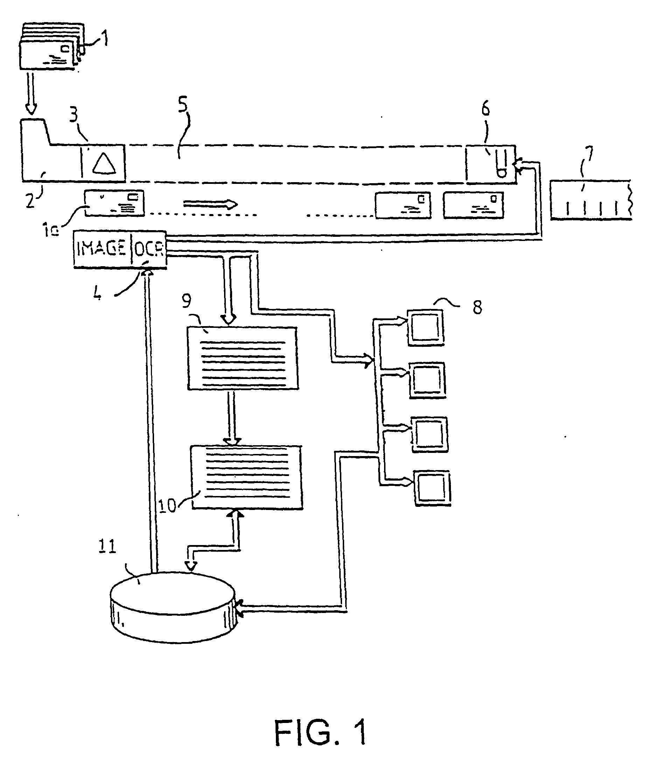

Bei der in FIG 1 gezeigten erfindungsgemäßen Vorrichtung werden zu verarbeitende Sendungen 1 über eine Eingabestation 2 einer Abtaststation 3 zugeführt, mittels der von zumindest einer Oberfläche der Sendungen la Abbilder erzeugt werden, die einer OCR-Einheit 4 zum automatischen Lesen der Adressinformation und zur Zuordnung eines entsprechenden Kodes, insbesondere eines Bar-Kodes, zugeführt werden. Nach der Abtastung der Sendungen gelangen diese in eine mechanische Speicherstrecke 5, die auch entfallen kann, und werden von dieser zu einer Druckstation 6 gefördert, wo die Sendungen 1 mit einem der gelesenen Adreßinformation entsprechenden Kode versehen werden um nachfolgend automatisch in einer Vorrichtung 7 sortiert zu werden. Bekannt aus dem Stand der Technik ist die Aufschaltung der Bilder auf eine Videokodiervorrichtung 8 mit einem oder mehreren Videokodierplätzen. Üblicherweise enthält der zu verarbeitende Sendungsstrom zu einem bestimmten Prozentsatz Sendungen mit nicht automatisch lesbarer Adressinformation bzw. Sendungen, deren Adressinformation nicht innerhalb einer vorgegebenen Zeit automatisch lesbar ist. Die maximale Zeit, die zum Lesen der Adressinformation bei einem einmaligen Durchlauf der Sendungen zur Verfügung steht, wird i.w. bestimmt durch die Laufzeit einer Sendung in der Speicherstrecke, bis sie die Druckstation 6 erreicht. Die Bilder solcher Sendungen 1, deren Adressgebiete nicht innerhalb einer vorgegebenen Zeit automatisch ermittelt worden sind, werden an eine Vorrichtung 9 zur automatischen Ermittlung von Lage und Umrisse der z.B. zehn größten typographischen Gebieten als Signatur übertragen. Die Signatur wird dann an einen Komparator 10 übermittelt, der in einer Datenbank 11 gespeicherte Signaturen hinsichtlich ihrer Übereinstimmung mit der ermittelten aktuellen Signatur vergleicht. Dieser Komparator 10 ist Bestandteil einer nicht dargestellten Steuereinheit, die den funktionsgemäßen Austausch der Daten realisiert. Wurde keine Übereinstimmung festgestellt, so wird das Abbild an die Videokodiervorrichtung 8 zur Ermittlung der Position des Gebietes mit der Verteilinformation verteilt. Die so ermittelte Position wird dann zusammen mit der Signatur in die Datenbank 11 übertragen. Bei Übereinstimmung mit einer gespeicherten Signatur wird die dazugehörige Position des gesuchten Gebietes an die OCR-Einheit 4 übermittelt und ein weiterer OCR-Lesevorgang wird gestartet.

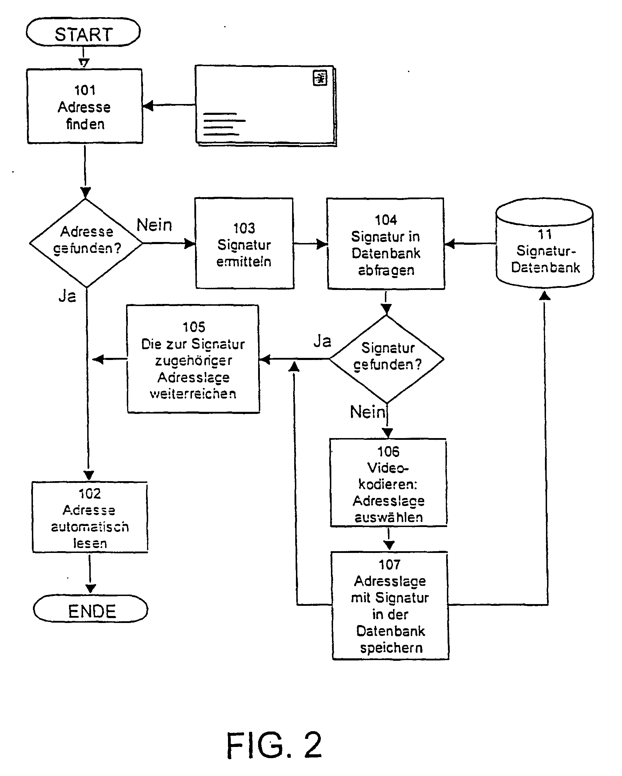

Der Ablauf des Verfahrens ist in FIG 2 noch einmal dargestellt.

Als erstes erfolgt das Suchen des Gebietes mit der Empfängeradresse als Verteilinformation 101 durch die OCR-Einheit 4. Ist das Suchen erfolgreich, wird die Verteilinformation (Adresse) automatisch durch die OCR-Einheit 4 gelesen 102. Konnte die Adresse nicht gefunden werden, d.h. das Gebiet mit der Verteilinformation wurde nicht identifiziert, so wird aus dem digitalisierten Abbild der Sendung das Layout von typographischen Mermalen als Signatur ermittelt 103. Die Merkmale umfassen Höhe, Breite und Lage(Position) der zehn größten typographischen Gebiete einer Sendung. Diese Signatur wird dann mit früher ermittelten und in der Datenbank 11 gespeicherten Signaturen hinsichtlich Übereinstimmung verglichen 104. Wurde eine übereinstimmende Signatur gefunden, wird die mit der Signatur ebenfalls in der Datenbank 11 gespeicherte, durch Videokodierung ermittelte Position des gesuchten Gebietes mit der Verteilinformation an die OCR-Einheit 4 übermittelt 105 und der Lesevorgang beginnt. Konnte keine übereinstimmende Signatur gefunden werden, wird das entsprechende Abbild mit dem Ergebnis der OCR-Einheit 4 (kein Adressgebiet gefunden) zur Videokodiervorrichtung 8 übertragen, wo eine Videokodierkraft die Position der gesuchten Adresse auswählt 106. Anschließend wird diese videokodierte Adresslage mit der dazugehörigen Signatur in die Datenbank aufgenommen 107 und die Adresslage wird ebenfalls an die OCR-Einheit 4 weitergereicht 105.

## Patentansprüche

1. Verfahren zum Ermitteln von Gebieten mit Verteilinformationen auf Sendungen, wobei ein digitales Abbild der die Verteilinformationen aufweisenden Oberfläche jeder Sendung (1) gewonnen und gespeichert wird und einer OCR-Einheit (4) zur automatischen Auswertung zugeführt wird und bei nicht eindeutig erkanntem gesuchten Gebiet das zugehörige gesamte Abbild der die Verteilinformationen aufweisenden Oberfläche an eine Videokodiervorrichtung (8) weitergeleitet wird, **dadurch gekennzeichnet, dass** bei nicht eindeutig automatisch erkanntem Gebiet mit der zu lesenden Verteilinformation aus dem jeweiligen digitalen Abbild Lage und Umrisse der n größten typografischen Gebiete als Signatur des Abbildes ermittelt werden, in einer Datenbank (11), in der die Signaturen der Abbilder der Sendungen (1), bei denen die Position der gesuchten Gebiete nicht eindeutig automatisch ermittelt wurde, und die Position der mittels Videokodierung ermittelten dazugehörigen gesuchten, die Verteilinformationen aufweisenden Gebiete gespeichert sind, eine mit der ermittelten aktuellen Signatur im festgelegten Umfang übereinstimmende Signatur gesucht wird (104), dass bei Übereinstimmung die dazugehörige videokodierte Gebietsposition an die OCR-Einheit (4) übertragen (105) und ein neuer automatischer Leseprozess gestartet wird und dass im Falle fehlender Übereinstimmung das Abbild zur Videokodiervorrichtung (8) übertragen wird, die videokodierte Position des Gebietes mit der Verteilinformation ebenfalls an die OCR-Einheit (4) zur Durchführung eines weiteren Leseprozesses übermittelt (105) und mit der Signatur dieses Abbildes in der Datenbank gespeichert wird (107).

2. Verfahren nach Anspruch 1, **dadurch gekennzeichnet, dass** über elektronische Netze die entsprechenden Daten aus mehreren Lesesystemen in eine Datenbank (11) eingespeichert werden sowie ein Zugriff aus den Lesesystemen in die Datenbank (11) zur Suche nach den Signaturen erfolgt.

3. Vorrichtung zur Durchführung des Verfahrens nach Anspruch 1 mit einer Abtaststation (3) zur Erzeugung und Speicherung von digitalen Abbildern der Sendungen, einer OCR-Einheit (4) zur automatischen Auswertung der Abbilder mit den Verteilinformationen und einer Videokodiervorrichtung (8) zur manuellen Ermittlung der die gesuchten Verteilinformationen aufweisenden Bereiche in den Abbildern, die an die Videokodiervorrichtung (8) bei nicht eindeutig erkannten gesuchten Gebieten übertragen werden,
**gekennzeichnet durch,**
- eine Vorrichtung (9) zur automatischen Ermittlung von Lage und Umrissen der n größten typographischen Gebiete aus dem jeweiligen Abbild bei nicht eindeutig automatisch erkanntem, die gesuchte Verteilinformation aufweisendem Gebiet als Signatur des Abbildes,
- einer Datenbank (11), in der die Signaturen mit den dazugehörigen videokodierten Positionen der Gebiete mit den Verteilinformationen gespeichert werden,
- einer Steuereinheit mit einem Komparator (10) zum Vergleich der aktuellen Signatur mit den in der Datenbank (11) gespeicherten Signaturen, die bei Übereinstimmung beim Signaturvergleich die entsprechende gespeicherte Position des Gebietes mit der Verteilinformation an die OCR-Einheit (4) für einen erneuten Leseprozess übermittelt, die bei fehlender Übereinstimmung das dazu gehörige Abbild zur Videokodiervorrichtung (8) und die dann videokodierte Position des Gebietes mit der Verteilinformation an die OCR-Einheit (4) überträgt und die diese Position und die Signatur in der Datenbank (11) abspeichert.

## Claims

1. Method for determining zones containing distribution information on mailed items, a digital image of that surface of each mailed item (1) which has the distribution information being obtained and stored and being fed to an OCR unit (4) for automatic evaluation and, in the case where the zone sought is not identified unambiguously, the associated entire image of the surface having the distribution information is forwarded to a video coding device (8), **characterized in that**, in the case where the zone with the distribution information to be read is not automatically identified unambiguously, the position and contours of the n largest typographical zones are determined from the respective digital image as signature of the image, and a signature that matches the current signature determined to a defined extent is sought (104) in a database (11) in which are stored the signatures of the images of the mailed items (1) in the case of which the position of the zones sought has not been automatically determined unambiguously, and the position of the associated zones sought which have the distribution information and are determined by means of video coding, **in that**, in the event of matching, the associated video-coded zone position is transmitted (105) to the OCR unit (4) and a new automatic read process is started, and **in that**, in the case of a lack of matching, the image is transmitted to the video coding device (8), the video-coded position of the zone with the distribution information is likewise communicated (105) to the OCR unit (4) for carrying out a further read process and is stored (107) with the signature of this image in the database.

2. Method according to Claim 1, **characterized in that**, by means of electronic networks, the corresponding data from a plurality of read systems are stored in a database (11) and an access is made from the read systems to the database (11) in order to search for the signatures.

3. Device for carrying out the method according to Claim 1 having a scanning station (3) for generating and storing digital images of the mailed items, an OCR unit (4) for automatically evaluating the images with the distribution information, and a video coding device (8) for manually determining the regions having the distribution information sought in the images which are transmitted to the video coding device (8) in the case where zones sought are not identified unambiguously,
**characterized by**
- a device (9) for automatically determining the position and contours of the n largest typographical zones from the respective image, in the case where the zone having the distribution information sought is not automatically identified unambiguously, as signature of the image,
- a database (11) in which are stored the signatures with the associated video-coded positions of the zones with the distribution information,
- a control unit having a comparator (10) for comparing the current signature with the signatures stored in the database (11), which, in the event of matching in the signature comparison, communicates the corresponding stored position of the zone with the distribution information to the OCR unit (4) for a renewed read process, which, in the event of a lack of matching, transmits the associated image to the video coding device (8) and the then video-coded position of the zone with the distribution information to the OCR unit (4) and which stores this position and the signature in the database (11).

## Revendications

1. Procédé pour déterminer sur des envois des zones comportant des informations de distribution, d'après lequel une reproduction numérique de la surface - de chaque envoi (1) - munie des informations de distribution est obtenue et mémorisée et est conduite à une unité de ROC (4) pour être exploitée automatiquement et, lorsque la zone recherchée n'est pas reconnue de façon univoque, toute la reproduction correspondante de la surface munie des informations de distribution est transmise à un dispositif de vidéocodage (8),
**caractérisé en ce que**,
lorsque la zone recherchée munie des informations de distribution à lire n'est pas reconnue de façon univoque, la position et les contours des n plus grandes zones typographiques sont déterminés sous forme de signature de la reproduction à partir de la reproduction numérique concernée et
une signature qui correspond dans l'étendue définie à la signature qu'on est en train d'établir est recherchée (104) dans une base de données (11) dans laquelle sont mémorisées d'une part les signatures des reproductions pour les envois (1) sur lesquels la position des zones recherchées n'a pas pu être déterminée automatiquement de façon univoque et d'autre part la position des zones correspondantes, recherchées et établies à l'aide du vidéocodage, et munies des informations de distribution,
lorsqu'il y a correspondance, la position de zone vidéocodée correspondante est transmise (105) à l'unité de ROC (4) et une nouvelle opération automatique de lecture commence et,
au cas où il n'y a pas de correspondance, la reproduction est transmise au dispositif de vidéocodage (8), la position vidéocodée de la zone munie des informations de distribution est également transmise (105) à l'unité de ROC (4) pour exécuter une autre opération de lecture et elle est mémorisée (107) dans la base de données avec la signature de cette reproduction.

2. Procédé selon la revendication 1, **caractérisé en ce que**
les données correspondantes provenant de plusieurs systèmes de lecture sont stockées dans une base de données par l'intermédiaire d'un réseau électronique et
un accès à la base de données (11) depuis les systèmes de lecture permet de rechercher les signatures.

3. Dispositif pour exécuter le procédé selon la revendication 1, comportant
- un poste de balayage (3) pour produire et pour mémoriser des reproductions numériques des envois,
- une unité de ROC (4) pour exploiter automatiquement les reproductions munies des informations de distribution et
- un dispositif de vidéocodage (8) pour établir à la main les zones munies des informations de distribution recherchées dans les reproductions qui sont transmises au dispositif de vidéocodage (8) lorsque les zones recherchées n'ont pas été reconnues de façon univoque,
**caractérisé par**
- un dispositif (9) pour établir automatiquement la position et les contours des n plus grandes zones typographiques sur la reproduction en question pour servir de signature à la reproduction lorsque la zone munie des informations recherchées de distribution n'a pas été reconnue automatiquement de façon univoque,
- une base de données (11) dans laquelle sont mémorisées les signatures ainsi que les positions vidéocodées correspondantes des zones munies des informations de distribution,
- une unité de commande munie d'un comparateur (10) pour comparer la signature actuelle aux signatures mémorisées dans la base de données (11), laquelle unité de commande, lorsqu'il y a correspondance lorsque les signatures sont comparées, transmet la position mémorisée correspondante de la zone munie des informations de distribution à l'unité de ROC (4) pour qu'elle réalise une nouvelle opération de lecture et, lorsqu'il n'y a pas de correspondance, transfère au dispositif de vidéocodage (8) la reproduction correspondante et à l'unité de ROC la position alors vidéocodée de la zone munie des informations de distribution et l'unité de commande enregistre cette position et la signature dans la base de données (11).
